(19) Europäisches Patentamt
European Patent Office
Office européen des brevets

(11) EP 1 384 756 A1

(12) # EUROPEAN PATENT APPLICATION
published in accordance with Art. 158(3) EPC

(43) Date of publication:
**28.01.2004 Bulletin 2004/05**

(21) Application number: **02718532.1**

(22) Date of filing: **11.04.2002**

(51) Int Cl.[7]: **C08L 81/02**, C08K 7/18, G02B 6/36

(86) International application number:
**PCT/JP2002/003611**

(87) International publication number:
**WO 2002/083792 (24.10.2002 Gazette 2002/43)**

(84) Designated Contracting States:
**AT BE CH CY DE DK ES FI FR GB GR IE IT LI LU MC NL PT SE TR**

(30) Priority: **13.04.2001 JP 2001115221**

(71) Applicant: **IDEMITSU PETROCHEMICAL CO., LTD.**
**Tokyo 130-0015 (JP)**

(72) Inventors:
- **MURAKAMI, Tomoyoshi**
  **Ichihara-shi, Chiba 299-0107 (JP)**
- **IGA, Toru**
  **Ichihara-shi, Chiba 299-0107 (JP)**
- **SUZUKI, Shigemasa**
  **Ichihara-shi, Chiba 299-0107 (JP)**

(74) Representative:
**Gille Hrabal Struck Neidlein Prop Roos**
**Patentanwälte**
**Brucknerstrasse 20**
**40593 Düsseldorf (DE)**

(54) **POLYARYLENE SULFIDE RESIN COMPOSITION FOR OPTICAL COMMUNICATION PART**

(57) The invention is drawn to a polyarylene sulfide resin composition for optical communications parts, containing a polyarylene sulfide resin (A) having a melt viscosity of 8 to 20 Pa·s as measured at 300°C and a shear rate of 500/sec and spherical silica (B) having a mean particle size of 3 to 25 μm and containing silica particles having a particle size of 1 μm or less in an amount of 50 wt.% or less based on the entire amount of the silica, the component (A) content being 15 wt.% or more and less than 20 wt.% and the component (B) content being more than 80 wt.% and 85 wt.% or less, based on the sum of the weights of the components (A) and (B). According to the invention, a polyphenylene sulfide resin composition suitably used for forming optical communications parts such as optical fiber connector ferrules and sleeves can be provided.

EP 1 384 756 A1

## Description

### Technical Field

The present invention relates to a polyarylene sulfide resin composition for forming optical communications parts. More particularly, the invention relates to a polyarylene sulfide resin composition suitable for forming high-precision optical communications parts such as optical fiber connector ferrules and sleeves.

### Background Art

Conventionally, optical communications parts such as optical fiber connector ferrules and sleeves employed in the field of optical communications have generally been produced from an epoxy resin composition containing silica as a filler, since such an epoxy resin composition provides excellent dimensional precision, mechanical strength, and heat resistance.

However, the aforementioned epoxy resin composition is not suited for large-scale production, because the composition requires a long-term molding cycle, and a mold must be cleaned after molding of every batch. Moreover, sprues, runners, and similar parts cannot be recycled, thereby lowering the yield of products from the composition. In addition, the epoxy resin composition has problems intrinsic to thermosetting resin.

Meanwhile, a thermoplastic resin composition; e.g., a polyarylene sulfide (hereinafter abbreviated as PAS) resin composition has been proposed for producing optical communications parts. Specifically, Japanese Patent Application Laid-Open (*kokai*) No. 57-196208 discloses a resin composition containing a PAS resin and spherical particles as a filler, and Japanese Patent Application Laid-Open (*kokai*) No. 6-299072 discloses a resin composition containing a PAS resin and silica serving as a filler, the silica being surface-treated with a silane coupling agent. International Patent Publication WO 95/25770 discloses a resin composition containing a PAS resin along with whiskers and spherical silica serving as fillers.

However, molded products obtained from these resin compositions have unsatisfactory dimensional precision, and particularly, these resin composition cannot be used for producing parts such as single-mode optical fiber connection parts, which must have high precision.

Japanese Patent Application Laid-Open (*kokai*) No. 2000-1615 discloses a PAS resin/silica composition containing whiskers as a filler. However, the composition is unsatisfactory in provision of a dimensional precision which satisfies the precision level of single-mode optical fiber connection parts. Japanese Patent Application Laid-Open (*kokai*) Nos. 2000-204252 and 2000-273304 disclose PAS resin compositions containing a comparatively large amount of silica as a filler, the compositions being prepared by modifying the particle size of silica particles and the crystallization temperature of the PAS resin. However, these compositions are unsatisfactory in provision of sufficient dimensional precision, and the performance of these compositions must be further improved.

### Disclosure of the Invention

In view of the foregoing, an object of the present invention is to provide a PAS resin composition which provides very high dimensional precision and is suitable for producing connection parts for optical fiber or a similar material.

The present inventors have conducted extensive studies in order to produce a PAS resin composition which provides high dimensional precision, and have found that the above-mentioned object is attained by a composition containing in predetermined proportions a PAS resin having a melt viscosity falling within a specific range, and spherical silica having a specific particle size and showing a characteristic particle size distribution profile. The present invention has been accomplished on the basis of this finding.

Accordingly, the present invention provides a PAS resin composition for optical communications parts, characterized in that the composition comprises a PAS resin (A) having a melt viscosity of 8 to 20 Pa·s as measured at 300°C and a shear rate of 500/sec, and spherical silica (B) having a mean particle size of 3 to 25 µm and containing silica particles having a particle size of 1 µm or less in an amount of 50 wt.% or less based on the entire amount of the silica, the content of component (A) being 15 wt.% or more and less than 20 wt.% and the content of component (B) being more than 80 wt.% and 85 wt.% or less, based on the sum of the weights of the components (A) and (B).

### Brief Description of the Drawing

Fig. 1 is a perspective view showing a plate-like molded product used for determining the dimensional precision of the product in Examples and Comparative Examples.

Best Mode for Carrying Out the Invention

The PAS resin serving as component (A) used in the PAS resin composition for optical communications parts of the present invention is a polymer containing a repeating unit represented by formula [-Ar-S-] (wherein Ar represents an arylene group and S represents sulfur) in an amount of 70 mol% or more. A typical example of the PAS resin is a polyarylene sulfide containing, in an amount of 70 mol% or more, a repeating unit represented by the following formula (I):

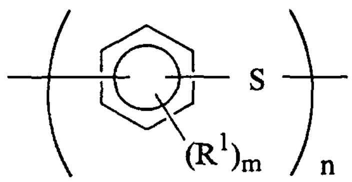

(I)

(wherein $R^1$ represents a substituent selected from among a C≤6 alkyl group, an alkoxyl group, a phenyl group, a carboxyl group or a metal salt thereof, an amino group, a nitro group, and a halogen atom such as fluorine, chlorine, or bromine; m is an integer of 0 to 4; and n represents an average polymerization degree falling within a range of 10 to 300).

When the amount of the repeating unit is less than 70 mol%, the polymer contains a crystalline component — a characteristic component of crystalline polymer — in a small amount, thereby sometimes resulting in poor mechanical strength.

A homopolymer of the repeating unit as well as a copolymer containing the repeating unit may be used.

Examples of the co-monomer units contained in the copolymer include an m-phenylene sulfide unit, an o-phenylene sulfide unit, a p,p'-diphenylene ketone sulfide unit, a p,p'-diphenylene sulfone sulfide unit, a p,p'-biphenylene sulfide unit, a p,p'-diphenylene methylene sulifide unit, a p,p'-diphenylene cumenyl sulfide unit, and a naphthyl sulfide unit.

No particular limitation is imposed on the molecular structure of the polymer, and the polymer may have any of a linear structure, a branch structure, and a cross-linking structure. Among them, a linear-type and/or a semi-linear-type polymer are preferred. Across-linking-type polymer is less preferred, because such a polymer provides poor dimensional stability under hygroscopic conditions and poor mechanical strength.

In other words, the polyarylene sulfide which is preferably used in the present invention is a linear-type polymer having a substantially linear structure, or a semi-linear-type polymer having a cross-linking structure or a branch structure provided by introducing a small amount of a monomer having three or more functional groups into co-monomer components. Such a polymer may be blended with the polymer having a substantially linear structure.

According to the present invention, the PAS resin can also be a polymer having an increased melt viscosity and improved moldability which is prepared through oxidative or thermal cross-linking of a substantially linear polymer having a comparatively low molecular weight.

The PAS resin which is used in the present invention has a melt viscosity falling within a range of 8 to 20 Pa·s as measured at 300°C and a shear rate of 500/sec. When the melt viscosity is in excess of 20 Pa·s, the PAS resin exhibits decreased flowability during molding, resulting in deterioration in dimensional precision of the molded products and difficulty in granulation, whereas when the melt viscosity is less than 8 Pa·s, mechanical strength of the molded products drops considerably.

The method of determining the melt viscosity will be described hereinlater.

The spherical silica serving as component (B) used in the PAS resin composition of the present invention may be fused silica (amorphous silicon dioxide), crystalline silica (quartz, tridymite, cristobalite, etc.), or a mixture thereof. Amorphous silica produced by crushing of raw silica greatly decreases the flowability of the resin composition, and well-balanced physical properties of the molded products are difficult to attain.

The spherical silica (B) must have a mean particle size falling within a range of 3 to 25 μm and must contain silica particles having a particle size of 1 μm or less in an amount of 50 wt.% or less based on the entire amount of the silica. Notably, the mean particle size is determined by means of a laser diffraction scattering particle size distribution meter. When the mean particle size is less than 3 μm, the thixotropy-related factors of the composition upon melting become unacceptably significant, thereby deteriorating flowability during molding, particularly end transferrability, resulting in poor dimensional precision of the molded products, whereas when the mean particle size is in excess of 25 μm, mechanical strength and surface smoothness decrease, thereby resulting in poor dimensional precision of the molded products.

When the spherical silica contains silica particles having a particle size of 1 μm or less in an amount more

than 50 wt.%, the particles are prone to aggregation, thereby deteriorating mechanical strength of the molded products.

The spherical silica is preferably surface-treated with a silane compound. Examples of the silane compound include aminosilane, vinylsilane, and epoxysilane. Of these, vinylsilane is particularly preferred, from the viewpoint of high moisture resistance. The thus-surface-treated spherical silica improves mechanical strength and moisture resistance of the molded products, thereby desirably enhancing dimensional stability.

In addition, the spherical silica preferably has a circularity of 0.90 or more. When the circularity is less than 0.90 or silica particles are not spherical, the melt viscosity of the resin composition increases, thereby possibly deteriorating flowability upon molding and granulation characteristics. The method for determining the above circularity will be described hereinlater.

In the PAS resin composition of the present invention, the component (A) is contained in an amount of 15 wt.% or more and less than 20 wt.%, and the component (B) is contained in an amount more than 80 wt.% and 85 wt.% or less, based on the sum of the weights of the components (A) and (B) (i.e., PAS resin and spherical silica). When the component (A) content is less than 15 wt.%, the melt viscosity of the resin composition increases, thereby deteriorating moldability and dimensional precision, whereas when the component (A) content is 20 wt.% or more, dimensional precision is deteriorated.

Into the PAS resin composition of the present invention, a coupling agent, preferably a silane coupling agent such as aminosilane, vinylsilane, or epoxysilane, can be incorporated in accordance with needs, preferably in an amount 0.3 to 3.0 parts by weight, more preferably 0.5 to 1.5 parts by weight, based on the sum of the amount (100 parts by weight) of the components (A) and (B). Post-addition of any of these coupling agents is effective, particularly when the component (B) is not surface-treated with a silane compound in advance.

When the amount of the above silane compound is less than 0.3 parts by weight, mechanical strength of the molded product will not be enhanced, whereas when the amount is in excess of 3.0 parts by weight, moldability of the composition may be deteriorated due to an increase in melt viscosity.

To the PAS resin composition of the present invention, a variety of additive components can be added in accordance with needs, so long as the objects of the invention are not impeded. Examples of the additive components include additives such as antioxidants, weather-resistant agents, lubricants, plasticizers, antistatic agents, and colorants; and thermoplastic and thermosetting resins such as poly(4-methyl-pentene-1) resin, polyamide, epoxy resins, silicone resins, polyolefins, polyether sulfones, and polyphenylene ethers. Of these, poly(4-methyl-pentene-1) resin is preferred as an additive resin. Examples of other additives include rubber materials such as hydrogenated SBS, hydrogenated NBR, silicone rubber, and fluororubber; pigments; fiber reinforce agents such as glass fiber, carbon fiber, aluminum borate whiskers, zinc oxide whiskers, calcium silicate whiskers, calcium carbonate whiskers, potassium titanate whiskers, and silicon carbide whiskers; and other inorganic fillers such as barium sulfate, calcium sulfate, calcium carbonate, kaolin, clay, pyrophaite, bentonite, sericite, zeolite, mica, talc, wollastonite, glass beads, and carbon beads.

The PAS resin composition of the present invention can be prepared by mixing the aforementioned components (A) and (B) and optionally employed additives by means of a Henschel mixer or a similar apparatus, and melt-kneading generally at 300 to 350°C by means of a single-screw extruder, a twin-screw extruder, or a similar apparatus.

The PAS resin composition of the present invention, which can provide molded products with considerably high dimensional precision, is suitably used for producing precision mechanical parts, particularly optical communications parts employed in the optical communications field; e.g., optical fiber connector ferrules and sleeves, optical pick-up parts, laser diode parts, and photosensor parts.

The present invention will next be described in more detail by way of examples.

Test methods employed in the examples are as follows.

(1) Determination of melt viscosity

The melt viscosity of each resin composition is determined by use of a Capillograph (product of Toyo Seiki) at a resin temperature of 300°C and a shear rate of 500/sec.

(2) Determination of circularity of silica particles

Aprojection image of a silica particle is captured through photography. The circularity of the silica particle is determined from the circumferential length of the projection image and the circumference of an equivalent circle having the same area as that of the projection image, and is calculated by the following equation:

(Circularity) = (Circumference of equivalent circle)/(Circumferential length of

projection image of particle)

The circularity is determined by means of a flow-type particle image analyzer (FPIA-1000, product of Sysmex Corporation)

(3) Determination of mechanical strength

Each resin composition (at 350°C) is molded by use of a 50-t injection molding apparatus (product of Nihon Seikosho) at a mold temperature of 135°C, to thereby prepare a test piece (127 × 12.7 × 3.2 mmt). The mechanical strength is determined in accordance with ASTM.
Bending strength is determined in accordance with ASTM D 790.

(4) Determination of dimensional precision

Each resin composition (at 350°C) is injection-molded at a mold temperature of 150°C, to thereby prepare a plate-like molded piece (8 × 7 × 2 mmt, through-hole diameter: 0.7 mm) shown in Fig. 1. After the piece has been allowed to stand for 24 hours at room temperature, the roundness (μm) of the through-hole is determined through measurement by means of an optical measuring apparatus (IDM-30, product of Daiichi Sokuhan) and calculation on the basis of image processing.

(5) General evaluation

Each composition was subjected to general evaluation on the basis of dimensional precision and bending strength of the relevant test piece, and the results are represented by the following four ratings:

AA (excellent): highly excellent dimensional precision, well-balanced with mechanical strength;
BB (good): good dimensional precision and mechanical strength, good balance;
CC (fair): unsatisfactory balance in dimensional precision and mechanical strength, but usable; and
DD (failure): poor dimensional precision, not usable.

The types of the resins and silica species which were employed in Examples and Comparative Examples will next be described.

(1) Type and properties of resins

PPS-1: polyphenylene sulfide (product of Idemitsu Petrochemical Co., Ltd., linear type, melt viscosity: 6 Pa·s)
PPS-2: polyphenylene sulfide (product of Idemitsu Petrochemical Co., Ltd., linear type, melt viscosity: 8 Pa·s)
PPS-3: polyphenylene sulfide (product of Idemitsu Petrochemical Co., Ltd., linear type, melt viscosity: 10 Pa·s)
PPS-4: polyphenylene sulfide (product of Idemitsu Petrochemical Co., Ltd., linear type, melt viscosity: 16 Pa·s)
PPS-5: polyphenylene sulfide (product of Idemitsu Petrochemical Co., Ltd., linear type, melt viscosity: 25 Pa·s)
PPS-6: polyphenylene sulfide (product of Idemitsu Petrochemical Co., Ltd., linear type, melt viscosity: 30 Pa·s)
PPS-7: polyphenylene sulfide (product of Tohpren Co., Ltd., semi-linear type, melt viscosity: 16 Pa·s)
PPS-8: polyphenylene sulfide (product of Toso, cross-link type, melt viscosity: 10 Pa·s)
PMP resin: poly(4-methylpentene-1) resin (TPX RT18, product of Mitsui Petrochemical Ind. Ltd., MFR 26 g/10 min)
Epoxy resin: epoxy resin (Epikote #1004, product of Yuka Shell, number average molecular weight: 1,600)

(2) Type and properties of silica species

Silica-1: surface-treated, spherical silica, mean particle size: 0.5 μm, circularity: 0.95, percent amount of silica particles having a particle size of ≤1 μm: 98 wt.% (SO-C2 vinylsilane, product of Admatechs Co., Ltd., modified product of SZ 6300 (product of Toray Dow Corning Silicone))
Silica-2: spherical silica, mean particle size: 0.5 μm, circularity: 0.95, percent amount of silica particles having a particle size of ≤1 μm: 98 wt.% (SO-C2, product of Admatechs Co., Ltd.)

Silica-3: surface-treated, spherical silica, mean particle size: 2 μm, circularity: 0.95, percent amount of silica particles having a particle size of ≤1 μm: 35 wt.% (SO-C5 vinylsilane, product ofAdmatechs Co., Ltd., modified product of SZ 6300 (product of Toray Dow Corning Silicone))

Silica-4: surface-treated, spherical silica, mean particle size: 5 μm, circularity: 0.93, percent amount of silica particles having a particle size of ≤1 μm: 8 wt.% (TSS-6 vinylsilane, product of Tatsumori Ltd., modified product of SZ 6300 (product of Toray Dow Corning Silicone))

Silica-5: spherical silica, mean particle size: 5 μm, circularity: 0.93, percent amount of silica particles having a particle size of ≤1 μm: 8 wt.% (TSS-6, product of Tatsumori Ltd.)

Silica-6: surface-treated, spherical silica, mean particle size: 6 μm, circularity: 0.92, percent amount of silica particles having a particle size of ≤1 μm: 3 wt.% (FB-6D epoxysilane, product of Denki Kagaku Kogyo K.K., modified product of SH 6040 (product of Toray Dow Corning Silicone))

Silica-7: surface-treated, spherical silica, mean particle size: 12 μm, circularity: 0.90, percent amount of silica particles having a particle size of ≤1 μm: 3 wt.% (FB-35 epoxysilane, product of Denki Kagaku Kogyo K.K., modified product of SH 6040 (product of Toray Dow Corning Silicone))

Silica-8: surface-treated, crushed silica, mean particle size: 15 μm, amorphous, percent amount of silica particles having a particle size of ≤1 μm: 2 wt.% (FS-74C epoxysilane, product of Denki Kagaku Kogyo K.K., modified product of SH 6040 (product of Toray Dow Corning Silicone))

Silica-9: surface-treated, spherical silica, mean particle size: 31 μm, circularity: 0.88, percent amount of silica particles having a particle size of ≤1 μm: 1 wt.% (FB-74 vinylsilane, product of Denki Kagaku Kogyo K.K., modified product of SZ 6300 (product of Toray Dow Corning Silicone))

Silica-10: surface-treated, spherical silica, mean particle size: 31 μm, circularity: 0.92, percent amount of silica particles having a particle size of ≤1 μm: 3 wt.% (S35-1210 vinylsilane, product of Micron Co., Ltd., modified product of SZ 6300 (product of Toray Dow Corning Silicone))

Examples 1 to 15 and Comparative Examples 1 to 10

PPS resin, an optional resin, and silica were uniformly mixed by means of a Henschel mixer in proportions shown in Tables 1 and 2, and each mixture was melt-kneaded by use of a twin-screw extruder (TEM 35B) at a resin temperature of 300 to 350°C, to thereby produce pellets of each mixture. Test pieces obtained from the pellets were measured in terms of dimensional precision and mechanical strength and subjected to general evaluation. The results are shown in Tables 1 and 2.

Table 1-1

| | | | | Examples | | | | |
|---|---|---|---|---|---|---|---|---|
| | | | | 1 | 2 | 3 | 4 | 5 |
| Components formulated | PPS resin | Type | | PPS-2 | PPS-2 | PPS-3 | PPS-3 | PPS-7 |
| | | (wt. parts) | | 19 | 19 | 19 | 19 | 19 |
| | Other resins | Type | | — | — | — | — | — |
| | | (wt. parts) | | — | — | — | — | — |
| | Silica | Type | | Silica-6<br>Silica-10 | Silica-6<br>Silica-9 | Silica-1<br>Silica-4 | Silica-1<br>Silica-4<br>Silica-10 | Silica-1<br>Silica-4<br>Silica-10 |
| | | (wt. parts) | | 51<br>30 | 51<br>30 | 31<br>50 | 20<br>30<br>31 | 20<br>30<br>31 |
| | | Av. particle size (μm) | | 15 | 15 | 3 | 14 | 14 |
| Evaluation of physical properties | Dimensional precision [Roundness] (μm) | | | 0.4 | 0.6 | 0.4 | 0.4 | 0.5 |
| | Linear expansion coeff. $\times 10^{-5}$/°C | | MD | 1.0 | 1.0 | 1.0 | 1.0 | 1.0 |
| | | | TD | 1.0 | 1.0 | 1.0 | 1.0 | 1.0 |
| | Bending strength (MPa) | | | 109 | 106 | 127 | 124 | 110 |
| | General evaluation | | | AA | BB | AA | AA | BB |

Table 1-2

| | | | | Examples | | | | |
|---|---|---|---|---|---|---|---|---|
| | | | | 6 | 7 | 8 | 9 | 10 |
| Components formulated | PPS resin | Type | | PPS-3 | PPS-4 | PPS-4 | PPS-4 | PPS-4 |
| | | (wt. parts) | | 18 | 18 | 18 | 19 | 18 |
| | Other resins | Type | | — | — | — | — | — |
| | | (wt. parts) | | — | — | — | — | — |
| | Silica | Type | | Silica-4 | Silica-1<br>Silica-4 | Silica-2<br>Silica-5 | Silica-4 | Silica-1<br>Silica-7 |
| | | (wt. parts) | | 82 | 17<br>65 | 17<br>65 | 81 | 37<br>45 |
| | | Av. particle size (μm) | | 5 | 4 | 4 | 5 | 7 |
| Evaluation of physical properties | Dimensional precision [Roundness] (μm) | | | 0.4 | 0.3 | 0.3 | 0.4 | 0.4 |
| | Linear expansion coeff. $\times 10^{-5}/°C$ | | MD | 1.0 | 1.0 | 1.0 | 1.0 | 1.0 |
| | | | TD | 1.0 | 1.0 | 1.0 | 1.0 | 1.0 |
| | Bending strength (MPa) | | | 114 | 119 | 105 | 117 | 121 |
| | General evaluation | | | AA | AA | AA | AA | AA |

Table 1-3

| | | | Examples | | | | |
|---|---|---|---|---|---|---|---|
| | | | 11 | 12 | 13 | 14 | 15 |
| Components formulated | PPS resin | Type | PPS-4 | PPS-3 | PPS-2 | PPS-3 | PPS-8 |
| | | (wt. parts) | 17 | 17 | 16 | 16 | 19 |
| | Other resins | Type | — | — | — | PMP Resin<br>Epoxy Resin | — |
| | | (wt. parts) | — | — | — | 2<br>1 | — |
| | Silica | Type | Silica-1<br>Silica-4<br>Silica-10 | Silica-1<br>Silica-6 | Silica-1<br>Silica-4<br>Silica-10 | Silica-4 | Silica-1<br>Silica-4<br>Silica-10 |
| | | (wt. parts) | 20<br>32<br>31 | 20<br>63 | 22<br>35<br>27 | 81 | 20<br>30<br>31 |
| | | Av. particle size (μm) | 14 | 5 | 12 | 6 | 14 |
| Evaluation of physical properties | Dimensional precision [Roundness] (μm) | | 0.3 | 0.3 | 0.2 | 0.4 | 0.5 |
| | Linear expansion coeff. $\times 10^{-5}/°C$ | MD | 1.0 | 1.0 | 0.9 | 1.1 | 1.0 |
| | | TD | 1.0 | 0.9 | 0.9 | 1.0 | 1.0 |
| | Bending strength (MPa) | | 120 | 113 | 108 | 115 | 63 |
| | General evaluation | | AA | AA | AA | AA | BB |

Table 2-1

| | | | Comparative Examples | | | | |
|---|---|---|---|---|---|---|---|
| | | | 1 | 2 | 3 | 4 | 5 |
| Components formulated | PPS resin | Type | PPS-2 | PPS-3 | PPS-3 | PPS-2 | PPS-5 |
| | | (wt. parts) | 19 | 19 | 19 | 19 | 19 |
| | Other resins | Type | — | — | — | — | — |
| | | (wt. parts) | — | — | — | — | — |
| | Silica | Type | Silica-8 | Silica-1 | Silica-3 | Silica-9 | Silica-1<br>Silica-4 |
| | | (wt. parts) | 81 | 81 | 81 | 81 | 31<br>50 |
| | | Av. particle size (μm) | 15 | 1 | 2 | 31 | 3 |
| Evaluation of physical properties | Dimensional precision [Roundness] (μm) | | Not kneadable | 0.6 | 0.6 | 1.2 | 0.9 |
| | Linear expansion coeff. $\times 10^{-5}/°C$ | MD | | 1.0 | 1.0 | 1.0 | 1.0 |
| | | TD | | 1.0 | 1.0 | 1.0 | 1.0 |
| | Bending strength (MPa) | | | 58 | 60 | 52 | 125 |
| | General evaluation | | DD | CC | CC | DD | DD |

Table 2-2

| | | | | Comparative Examples | | | |
|---|---|---|---|---|---|---|---|
| | | | 6 | 7 | 8 | 9 | 10 |
| Components formulated | PPS resin | Type | PPS-6 | PPS-1 | PPS-4 | PPS-5 | PPS-2 |
| | | (wt. parts) | 19 | 18 | 18 | 18 | 14 |
| | Other resins | Type | — | — | — | — | — |
| | | (wt. parts) | — | — | — | — | — |
| | Silica | Type | Silica-1<br>Silica-4<br>Silica-10 | Silica-4 | Silica-1<br>Silica-7 | Silica-1<br>Silica-4 | Silica-4 |
| | | (wt. parts) | 20<br>30<br>31 | 82 | 45<br>37 | 32<br>50 | 86 |
| | | Av. particle size (μm) | 14 | 5 | 6 | 3 | 5 |
| Evaluation of physical properties | Dimensional precision [Roundness] (μm) | | Not kneadable | 0.4 | 0.9 | Not kneadable | Not kneadable |
| | Linear expansion coeff. $\times 10^{-5}$/°C | MD | | 1.0 | 1.0 | | |
| | | TD | | 1.0 | 1.0 | | |
| | Bending strength (MPa) | | | 50 | 80 | | |
| | General evaluation | | DD | CC | DD | DD | DD |

[Remarks]

Example 15: Unsatisfactory mechanical strength due to use of a cross-linking-type PPS resin
Comparative Example 2: Unsatisfactory mechanical strength, and high screw rotational load during kneading
Comparative Example 3: Unsatisfactory mechanical strength, and high screw rotational load during kneading
Comparative Example 4: Unsatisfactory dimensional precision and mechanical strength, and high screw rotational load during kneading
Comparative Example 5: Unsatisfactory dimensional precision, and high screw rotational load during kneading
Comparative Example 7: Unsatisfactory mechanical strength
Comparative Example 8: Unsatisfactory dimensional precision

Industrial Applicability

The polyarylene sulfide resin composition of the present invention, capable of providing molded products with high dimensional precision, is suitably used for forming optical communications parts such as optical fiber connector ferrules and sleeves.

## Claims

1. A polyarylene sulfide resin composition for optical communications parts, **characterized in that** the composition comprises a polyarylene sulfide resin (A) having a melt viscosity of 8 to 20 Pa·s as measured at 300°C and a shear rate of 500/sec and spherical silica (B) having a mean particle size of 3 to 25 μm and containing silica particles having a particle size of 1 μm or less in an amount of 50 wt.% or less based on the entire amount of the silica, the component (A) content being 15 wt.% or more and less than 20 wt.% and the component (B) content being more than 80 wt.% and 85 wt.% or less, based on the sum of the weights of the components (A) and (B).

2. A resin composition as described in claim 1, wherein the polyarylene sulfide resin (A) is a linear-type and/or a semi-linear-type polyarylene sulfide resin.

3. A resin composition as described in claim 1, wherein the spherical silica (B) has a circularity of 0.90 or more.

4. A resin composition as described in claim 1, wherein the spherical silica (B) is surface-treated with a silane compound.

Fig. 1

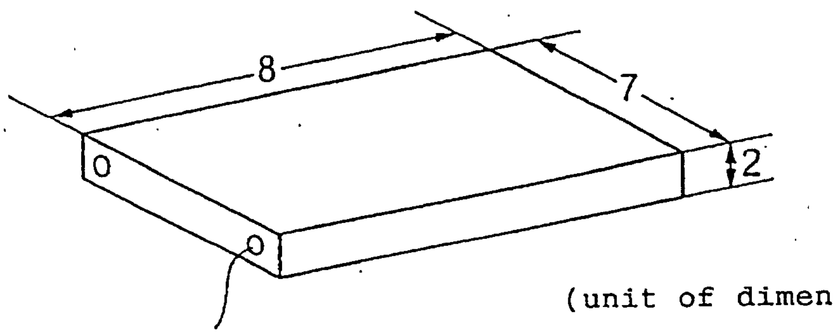


(unit of dimension: mm)

Through-hole (0.7 mmφ)

## INTERNATIONAL SEARCH REPORT

International application No.
PCT/JP02/03611

**A. CLASSIFICATION OF SUBJECT MATTER**
Int.Cl7 C08L81/02, C08K7/18, G02B6/36

According to International Patent Classification (IPC) or to both national classification and IPC

**B. FIELDS SEARCHED**

Minimum documentation searched (classification system followed by classification symbols)
Int.Cl7 C08L81/02

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)
CA, REGISTRY

**C. *DOCUMENTS CONSIDERED TO BE RELEVANT***

| Category* | Citation of document, with indication, where appropriate, of the relevant passages | Relevant to claim No. |
|---|---|---|
| X | EP 1065246 A1 (Idemitsu Petrochemical Co., Ltd.), 03 January, 2001 (03.01.01), Claims; Par. No. [0001]; comparative example 7 & US 2002/55582 A1 & JP 2000-204252 A | 1-4 |
| Y | JP 2000-273304 A (Idemitsu Petrochemical Co., Ltd.), 03 October, 2000 (03.10.00), Claims; Par. No. [0015]; examples & EP 1038922 A2 | 1-4 |
| Y | JP 63-108064 A (Denki Kagaku Kogyo Kabushiki Kaisha), 12 May, 1988 (12.05.88), Claims; page 3, upper left column, line 2 to upper right column, line 4 (Family: none) | 1-4 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>05 July, 2002 (05.07.02) | Date of mailing of the international search report<br>23 July, 2002 (23.07.02) |
| Name and mailing address of the ISA/<br>Japanese Patent Office | Authorized officer |
| Facsimile No. | Telephone No. |

Form PCT/ISA/210 (second sheet) (July 1998)